# EUROPÄISCHE PATENTSCHRIFT

(11) **EP 1 165 976 B1**
(45) Veröffentlichungstag und Bekanntmachung des Hinweises auf die Patenterteilung: **16.02.2005**
(21) Anmeldenummer: 00958415.2
(22) Anmeldetag: 10.08.2000
(51) Int. Cl.: F16C 7/02

(54) **VERBRENNUNGSKRAFTMASCHINE**
INTERNAL COMBUSTION ENGINE
MOTEUR A COMBUSTION INTERNE

(30) Priorität: 24.01.2000 DE 10003467
(43) Veröffentlichungstag der Anmeldung: 02.01.2002
(73) Patentinhaber: MEDERER, Gerhard, 87480 Weitnau-Seltmans (DE)
(72) Erfinder: MEDERER, Gerhard, 87480 Weitnau-Seltmans (DE)
(74) Vertreter: Lösch, Christoph
(86) Internationale Anmeldenummer: PCT/EP2000/007767
(87) Internationale Veröffentlichungsnummer: WO 2001/055606

(56) Entgegenhaltungen:
- WO-A-88/08922
- WO-A-93/21422
- DE-A- 3 030 615
- DE-A- 4 317 226
- DE-A- 19 504 735
- US-A- 5 595 146

## Beschreibung

Die Erfindung betrifft eine Verbrennungskraftmaschine mit mindestens einem Zylinder und einem in diesem axial verschieblichen Kolben, der über einen oberen Pleuelabschnitt und einen durch ein gemeinsames Gelenk mit diesem verbundenen unteren Pleuelabschnitt mit der Kurbelwelle verbunden ist und bei der beide Pleuelabschnitte durch einen angelenkten gemeinsamen Schwenkhebel an einer motorgehäusefest einstellbaren Achse abgestützt sind, wobei der obere Pleuelabschnitt an dem den Kolben abgewandten Ende eine über das gemeinsame Gelenk hinausgeführte axiale Auskragung aufweist und der Schwenkhebel mit dem den Pleuelabschnitten zugewandten Ende an der Auskragung gelenkig angreift, siehe WO-A-88/08922.

Bei Verbrennungskraftmaschinen obiger Art lassen sich durch Abstützung des Knickpleuels durch einen Schwenkhebel die Verweilzeiten des Kolbens nach OT günstig verlängern und Kraftstoffe mit verzögerten Verbrennungen verwenden. Gleichzeitig zeigt sich aber, daß relativ lange Schwenkhebel hohe Drehzahlen nicht zulassen. Außerdem erfordern die Schwenkhebel vielfach Abstützungen außerhalb des Gehäuses der Verbrennungskraftmaschine, was einen komplizierten Bauaufwand ergibt.

Aus der DE 30 30 615 A1 geht ein Hubkolbenmotor mit mindestens einen Zylinder und einem in diesem axial verschiebbaren Kolben hervor, der über ein Pleuel mit einer Kurbelwelle verbunden ist, wobei das Pleuel in einen oberen und unteren Abschnitt unterteilt Ist, welche durch ein gemeinsames Gelenk miteinander verbunden und durch einen am gemeinsamen Gelenk angreifenden Schwenkhebel motorgehäusefest abgestützt sind. Hierdurch soll der Verlauf des vom Kolben auf die Kurbelwelle übertragenen Drehmomentes und der Verlauf der Kolbengeschwindigkeit in einem weiten Umfang variiert werden können.

Aus der WO 88/08922 geht ferner eine Verbrennungskraftmaschine hervor, mit einem oberen Pleuelabschnitt an einem einem Kolben der Maschine abgewandten Ende und einem über ein gemeinsames Gelenk von Pleuelabschnitten hinausgeführtes axiales Verlängerungselement zur Erzeilung einer Leistungssteigerung und zur Anpassung an unterschiedliche Kraftstoffe.

Es ist Aufgabe der Erfindung bei Verbrennungskraftmaschinen obiger Art die Ausnutzung der Gasdruckkraft zu Erzielung eines höheren Drehmoments zu verbessern, die Verbrennung der Kraftstoffe günstiger zu gestalten und den Bauaufwand zu verringern.

Der Erfindung gemäß ist diese Aufgabe dadurch gelöst, daß die Länge des unteren Pleuelabschnitts im wesentlichen der 1,5-fachen Länge des oberen Pleuelabschnitts entspricht, die Gesamtlänge beider Pleuelabschnitte 2% größer als der Abstand zwischen dem kolbenseitigen Pleuellager des oberen Pleuelabschnitts und dem kurbelwellenseitigen Pleuellager des unteren Pleuelabschnitts im oberen Totpunkt des Kolbens ausgebildet ist, der Schwenkhebel mit der Länge des oberen Pleuelabschnitts susgeführt ist, der radiale Abstand des motorgehäusefesten Lagers des Schwenkhebels von der Zylinderachse 90% der Länge des oberen Pleuelabschnitts beträgt und der Fußpunkt der Projektion des Lagers auf die Zylinderachse von der Kubelwellenachse einen Abstand besitzt, der 30% des Abstands des kolbenseitigen Pleuellagers des oberen Pleuelabschnitts von der Kurbelwellenachse im oberen Totpunkt des Kolbens beträgt.

Der gegenüber der bekannten Ausführung nunmehr in seiner Länge kürzer gewählte Schwenkhebel ist vorteilhaft innerhalb des Motorgehäuses abstützbar und führt so zur Verkleinerung der Baugröße der Verbrennungskraftmaschine, wobei der Schwenkhebel über eine Teildrehung der Kurbelwelle einer Druckbelastung und einer weiteren Teildrehung der Kurbelwelle einer Zugbelastung ausgesetzt ist. Gleichzeitig wird eine stärkere Einknickung der Pleuelabschnitte erzielt, was eine längere Kolbenverweilzeit nach OT ergibt, wodurch eine weitere Verschiebung des Einspritzinterwalls auf einen späteren Zeitpunkt hin erfolgt, was die Verwendung von schwerer entflammbaren Kraftstoffen, wie Pflanzenöl, Biogas, Gasöl (Diesel) oder Mischungen von Gasöl mit Pflanzenölen möglich macht. Außerdem führt die durch den verkürzten Schwenkhebel erreichte stärkere Einknickung der Pleuelabschnitte zu einem vergrößertem Drehmoment nach OT bei gleichzeitig kurzem Kolbenweg und geringem Kolbenseitendruck.

In Ausbildung der Verbrennungskraftmaschine ist vorgesehen, daß die Länge der Auskragung zwischen Anlenkstelle des Schwenkhebels am oberen Pleuelabschnitt und dem gemeinsamem Lager beider Pleuelabschnitte 30% der Länge des oberen Pleuelabschnitts beträgt. Außerdem haben sich zu Änderungen der durch die Pleuelkinematik erzielbaren Wirkungen, wie Kolbenverweilzeit od.dgl. insbesondere exzentrische, radiale und/oder axiale Abstützungen für den Schwenkhebel als günstig erwiesen.

Die Erfindung ist in den Figuren verdeutlicht. Hierin zeigen:
- Fig. 1: eine Verbrennungskraftmaschine schematisch im Schnitt mit einer Gelenkpleuelkinematik entsprechend einer Stellung des Kolbens,
- Fig. 2: eine Verbrennungskraftmaschine schematisch im Schnitt,
- Fig. 3: Pleuel- und Schwenkhebelabschnitte in Seitenansicht,
- Fig. 4 und 5: graphische Darstellungen von Drehmoment und Kolbenweg,
- Fig. 6: eine Gelenkpleuelkinematik schematisch mit Kraftzerlegung und

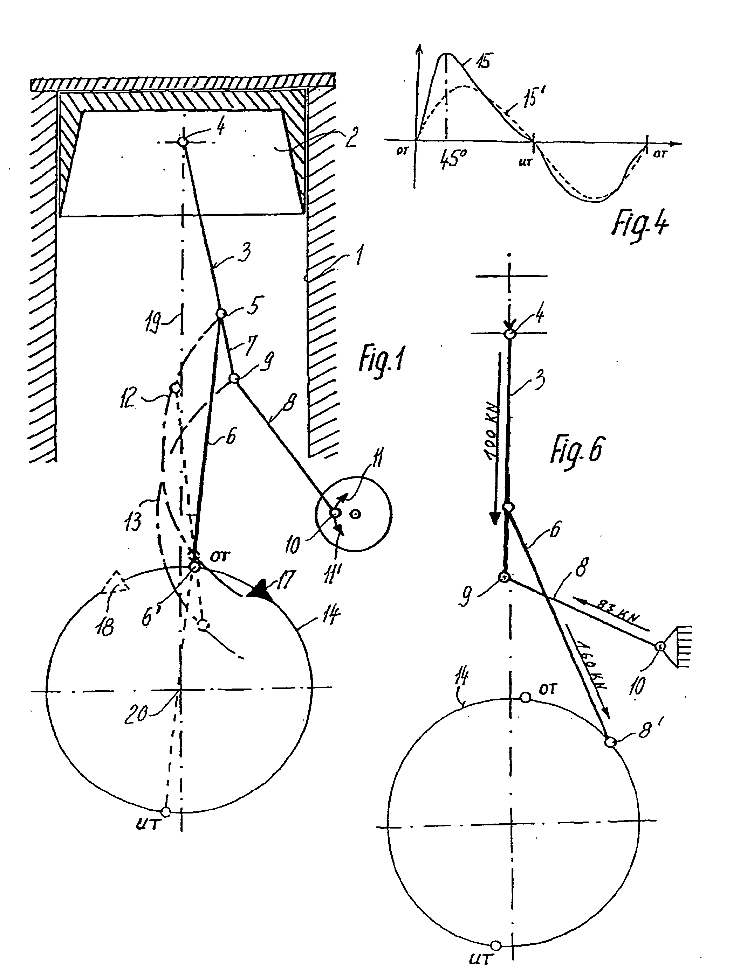

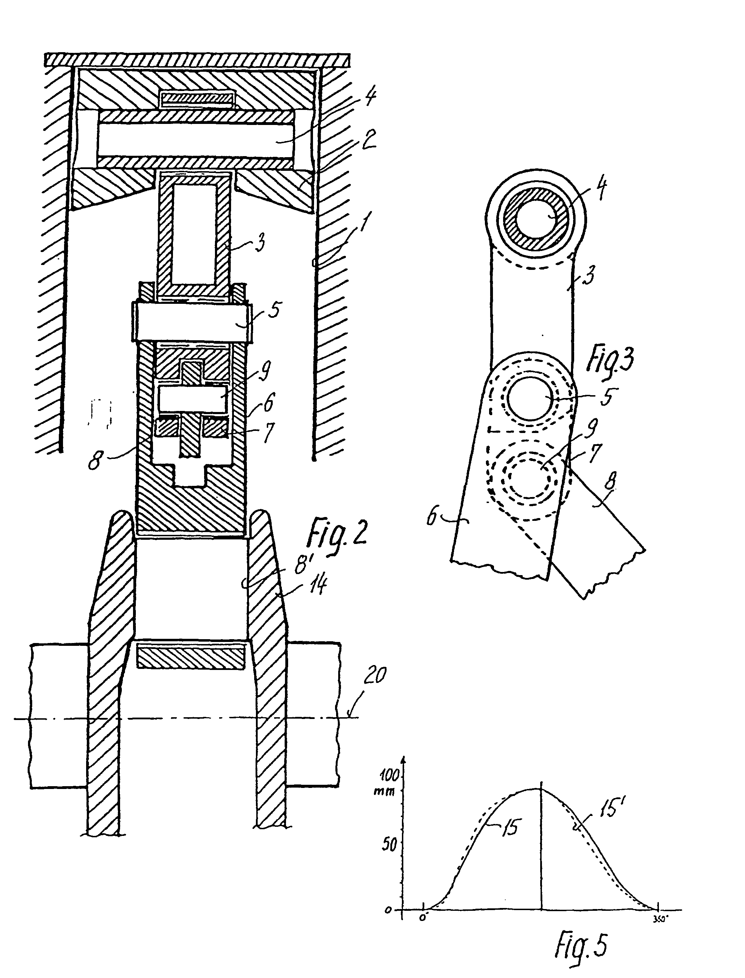

In den Fig. 1 und 2 ist eine als Viertaktmotor arbeitende Verbrennungskraftmaschine in schematischer Darstellung aufgezeigt.

Der Zylinder der Verbrennungskraftmaschine ist mit 1 bezeichnet der einen Kolben 2 längsverschieblich aufnimmt. Ein oberer Pleuelabschnitt 3 ist bei 4 am Kolben 2 angelenkt und über ein gemeinsames Gelenk 5 mit einem unteren Pleuelabschnitt 6 verbunden, der mit seinem unteren Ende bei 6' an der Kurbelwelle 14 angreift. Die beiden Pleuelabschnitte 3, 6 bilden ein Knickpleuel. Der obere Pleuelabschnitt 3 ist an dem dem Kolben 2 abgewandten Ende mit einer über das gemeinsame Gelenk 5 hinausgeführten Auskragung 7 versehen, an der ein Schwenkhebel 8 bei 9 gelenkig angreift, der sich an einer motorgehäusefesten Achse 10 abstützt. Die Achse 10 ist entsprechend den Pfeilen 11, 11' einstellbar am Motorgehäuse (nicht gezeigt) angeordnet. Die Einstellungen können dabei radial, axial oder exzentrisch erfolgen. Beim Ausrührungsbeispiel ist der Schwenkhebel 8 mit der Länge des oberen Pleuelabschnitts 3 ausgebildet, während die Auskragung 7 30% der Länge des oberen Pleuelabschnitts 3 beträgt. Der untere Pleuelabschnitt 6 ist mit einer Länge ausgebildet, die der 1,5 fachen Länge des oberen Pleuelabschnitts beträgt. Durch die Anwendung eines Schwenkhebels 8 mit relativ kurzer Länge ist der Schwenkhebel 8 mit Achse 10 vorteilhaft innerhalb des Motorgehäuses unterzubringen. Bei einer Abwärtsbewegung des Kolbens 2 bewegen sich die Pleuelabschnitte 3, 6 mit ihrem gemeinsamen Gelenk 5 entlang der Bogenlinie 12, während die Angriffsstelle 9 des Schwenkhebels 8 an der Auskragung 7 der Bogenlinie 13 folgt. Bei einer Abwärtsbewegung des Kolbens 2 um etwa 45 Grad der Kurbelwelle 14 aus OT (Fig. 1) in die Stellung Fig. 6, nimmt der obere Pleuelabschnitt 3 gestützt durch den Schwenkhebel 8 eine gestreckte Stellung ein und nachfolgend erfolgt eine starke Einknickung beider Pleuelabschnitte. Der Kolben 2 führt dabei einen im wesentlichen kleinen Kolbenweg mit großer Verweilzeit im Bereich von OT aus. Die große Verweilzeit des Kolbens wirkt sich günstig auf die Benutzung verwendeter schwer entflammbarer Kraftstoffe, wie Pflanzenölen od.dgl. aus. Die Fig. 6 zeigt weiter die erzielbare Kräftezerlegung auf den Pleuelabschnitten 3, 6 und dem Schwenkhebel 8 bei angenommener Einwirkung einer Kolbenaufdruckkraft von 100 KN bei Abwärtsbewegung des Kolbens 2. Die graphische Darstellung der Fig. 4 verdeutlicht bei etwa 45 Grad Kurbelwellenumdrehung eine Druckkraft von 160 KN am Pleuelabschnitt 6 und 83 KN am Schwenkhebel.

Die Fig. 4 und 5 lassen mit Kurven 15, 15' den Momentenverlauf erkennen. Auf der Abzisse der Darstellung sind 360 Grad einer Kurbelwellenumdrehung und auf der Ordinate der für konstante Kolbendruckkraft ermittelte Momentenwert aufgetragen. Die Fig. 4 zeigt mit der ausgezogenen Kurve 15 den Momentenverlauf bei einer Verbrennungskraftmaschine der erfindungsgemäßen Ausbildung, während die gestrichelte Linie 15' den Momentenverlauf bei einem herkömmlichen Vergleichsmotor erkennen läßt. Die Fig. 4 zeigt weiter, daß das maximale Drehmoment mit der Linie 15 bei einer Kurbelwellendrehung von etwa 45 Grad nach OT erreichbar ist. In Fig. 5 entspricht die ausgezogene Linie 15 die erfindungsgemäße Verbrennungskraftmaschine und die gestrichelte Linie 15' einer herkömmlichen Verbrennungskraftmaschine. Es ist erkennbar, daß der herkömmliche Motor seinen oberen Totpunkt früher verläßt und später erreicht, also insgesamt sehr viel kürzer im Bereich seiner oberen Totpunktstellung verweilt als der Kolben 2 der erfindungsgemäßen Ausführung nach Linie 15.

Während beim Ausführungsbeispiel der Fig. 1 der voll ausgezeichnete Pfeil 17 einen Umlauf der Kurbelwelle 14 in Uhrzeigerdrehrichtung zeigt, besteht die Möglichkeit, die Verbrennungskraftmaschine mit der Kurbelwellendrehrichtung entsprechend dem gestrichelt dargestellten Pfeil 18 zu drehen. Die vorbeschriebene Pleuelkinematik wird dabei in gleicher Weise zum Einsatz gebracht.

## Patentansprüche

1. Verbrennungskraftmaschine mit mindestens einem Zylinder und einem in diesem axial verschieblichen Kolben, der über einen oberen Pleuelabschnitt und einem durch ein gemeinsames Gelenk mit diesem verbundenen unteren Pleuelabschnitt mit der Kurbelwelle verbunden ist und bei der beide Pleuelabschnitte durch einen angelenkten, gemeinsamen Schwenkhebel (8) an einer motorgehäusefest einstellbaren Achse abgestützt sind, wobei der obere Pleuelabschnitt an dem den Kolben abgewandten Ende eine über das gemeinsame Gelenk hinausgeführte axiale Auskragung aufweist und daß der Schwenkhebel mit dem den Pleuelabschnitten zugewandten Ende an der Auskragung gelenkig angreift, **dadurch gekennzeichnet, daß** die Länge des unteren Pleuelabschnitts (6) im wesentlichen der 1.5 fachen Länge des oberen Pleuelabschnitts (3) entspricht, die Gesamtlänge beider Pleuelabschnitte (3, 6) 2% größer als der Abstand zwischen dem kolbenseitigen Pleuellager (4) des oberen Pleuelabschnitts (3) und dem kurbelwellenseitigen Pleuellager (6') des unteren Pleuelabschnitts (6) im oberen Totpunkt des Kolbens (2) ausgebildet ist und daß der Schwenkhebel (8) mit der Länge des oberen Pleuelabschnitts (3) ausgeführt ist, der radiale Abstand des motorgehäusefesten Stützlagers (10) des Schwenkhebels (8) von der Zylinderachse (19) 90% der Länge des oberen Pleuelabschnitts (3) beträgt und der Fußpunkt der Projektion des Stützlagers (10) auf die Zylinderachse (19) von der Kurbelwellenachse (20) einen Abstand besitzt, der 30% des Abstands des kolbenseitigen Pleuellagers (4) des oberen Pleuelabschnitts (3) von der Kurbelwellenachse (20) im oberen Totpunkt des Kolbens (3) beträgt.

2. Verbrennungskraftmaschine nach Anspruch 1, **dadurch gekennzeichnet, daß** die Länge des Auskragung (7) zwischen Anlenkstelle (9) des Schwenkhebels (8) am oberen Pleuelabschnitt (3) und dem gemeinsamen Lager (5) beider Pleuelabschnitte (3,6) 30% der Länge des oberen Pleuelabschnitts (3) entspricht

3. Verbrennungskraftmaschine nach Anspruch 1, **dadurch gekennzeichnet, daß** das den Pleuelabschnitten (3,6) abgewandte Stützlager (10) für den Schwenkhebel (8) im Motorblock abgestützt ist.

4. Verbrennungskraftmaschine nach Anspruch 1 und 3, **dadurch gekennzeichnet, daß** das Stützlager (10) für den Schwenkhebel (8) im Motorblock exzentrisch einstellbar ausgebildet ist.

5. Verbrennungskraftmaschine nach Anspruch 1 und 3, **dadurch gekennzeichnet, daß** das Stützlager (10) für den Schwenkhebel (8) im Motorblock radial und/oder axial verstellbar ausgebildet ist.

6. Verbrennungskraftmaschine nach Anspruch 1, **dadurch gekennzeichnet, daß** der untere Pleuelabschnitt (6) an dem den oberen Pleuelabschnitt (3) zugewandten Ende über eine Teillänge gabelförmig ausgebildet ist und daß in den Zwischenraum des gabelförmigen Endes des unteren Pleuelabschnitts (6) das gemeinsame Lager (5) für den oberen und unteren Pleuelabschnitt (3, 6) und die der Zylinderachse (19) zugenäherte Anlenkstelle (9) für den Schwenkhebel (8) angeordnet sind.

## Claims

1. Internal combustion engine having at least one cylinder and a piston, axially displaceable therein, which is connected to the crankshaft by way of an upper connecting rod section and a lower connecting rod section connected to the latter by a common joint, and in which the two connecting rod sections are supported on an adjustable axis fixed to the engine casing by a pivoted, common swivelling lever (8), the upper connecting rod section at the end remote from the piston having an axial projection carried beyond the common joint, and the swivelling lever with the end facing the connecting rod sections being articulated on the projection, **characterized in that** the length of the lower connecting rod section (6) is essentially equal to 1.5 times the length of the upper connecting rod section (3), the overall length of the two connecting rod sections (3, 6) is 2% greater that the distance between the piston-side connecting rod bearing (4) of the upper connecting rod section (3) and the crankshaft-side connecting rod bearing (6') of the lower connecting rod section (6) at the top dead centre of the piston (2), and that the swivelling lever (8) is formed with the length of the upper connecting rod section (3), the radial distance of the support bearing (10) of the swivelling lever (8), fixed to the engine casing, from the cylinder axis (19) is 90% of the length of the upper connecting rod section (3), and the base of the projection of the support bearing (10) on to the cylinder axis (19) is at a distance from the crankshaft axis (20), which is 30% of the distance between the piston-side connecting rod bearing (4) of the upper connecting rod section (3) and the crankshaft axis (20) at the top dead centre of the piston (2).

2. Internal combustion engine according to Claim 1, **characterized in that** length of the projection (7) between pivot point (9) of the swivelling lever (8) on the upper connecting rod section (3) and the common bearing (5) of the two connecting rod sections (3, 6) is equal to 30% of the length of the upper connecting rod section (3).

3. Internal combustion engine according to Claim 1, **characterized in that** the support bearing (10) for the swivelling lever (8) remote from the connecting rod sections (3, 6) is supported in the engine block.

4. Internal combustion engine according to Claim 1 and 3, **characterized in that** the support bearing (10) for the swivelling lever (8) is eccentrically adjustable in the engine block.

5. Internal combustion engine according to Claim 1 and 3, **characterized in that** the support bearing (10) for the swivelling lever (8) is radially and/or axially adjustable in the engine block.

6. Internal combustion engine according to Claim 1, **characterized in that** the lower connecting rod section (6) at the end facing the upper connecting rod section (3) is of forked design over a partial length and that the common bearing (5) for the upper and lower connecting rod sections (3, 6) and the pivot point (9) for the swivelling lever (8) approximated to the cylinder axis (19) are arranged in the gap in the forked end of the lower connecting rod section (6).

## Revendications

1. Moteur à combustion interne comprenant au moins un cylindre et un piston mobile axialement dans celui-ci, qui est connecté au vilebrequin par le biais d'une portion de bielle supérieure et une portion de bielle inférieure connectée à celle-ci par une articulation commune et dans lequel les deux portions de bielle sont supportées par un levier pivotant articulé commun (8) sur un axe ajustable fixé au carter du moteur, la portion de bielle supérieure présentant, à l'extrémité opposée au piston, une saillie axiale guidée au-delà de l'articulation commune et le levier pivotant venant en prise de manière articulée, avec l'extrémité tournée vers les portions de bielle, sur la saillie, **caractérisé en ce que** la longueur de la portion de bielle inférieure (6) correspond essentiellement à 1,5 fois la longueur de la portion de bielle supérieure (3), la longueur totale des deux portions de bielle (3, 6) est supérieure de 2% à la distance entre le palier de bielle (4), du côté du piston, de la portion de bielle supérieure (3) et le palier de bielle, du côté du vilebrequin (6'), de la portion de bielle inférieure (6) au point mort haut du piston (2) et **en ce que** le levier pivotant (8) est réalisé avec la longueur de la portion de bielle supérieure (3), la distance radiale du palier de support (10), fixé au carter du moteur, du levier pivotant (8) depuis l'axe du cylindre (19) vaut 90% de la longueur de la portion de bielle supérieure (3) et la base de la projection du palier de support (10) sur l'axe du cylindre (19) depuis l'axe du vilebrequin (20) possède une distance qui vaut 30% de la distance du palier de bielle (4), du côté du piston, de la portion de bielle supérieure (3) depuis l'axe du vilebrequin (20) au point mort haut du piston (2).

2. Moteur à combustion interne selon la revendication 1, **caractérisé en ce que**
la longueur de la saillie (7) entre le point d'articulation (9) du levier pivotant (8) au niveau de la portion de bielle supérieure (3) et le palier commun (5) des deux portions de bielle (3, 6) correspond à 30% de la longueur de la portion de bielle supérieure (3).

3. Moteur à combustion interne selon la revendication 1,
**caractérisé en ce que**
le palier de support (10) opposé aux portions de bielle (3, 6) pour le levier pivotant (8) est supporté dans le bloc moteur.

4. Moteur à combustion interne selon la revendication 1 et 3, **caractérisé en ce que**
le palier de support (10) pour le levier pivotant (8) est réalisé de manière ajustable excentriquement dans le bloc moteur.

5. Moteur à combustion interne selon la revendication 1 et 3, **caractérisé en ce que**
le palier de support (10) pour le levier pivotant (8) dans le bloc moteur est réalisé de manière réglable radialement et/ou axialement.

6. Moteur à combustion interne selon la revendication 1, **caractérisé en ce que**
la portion de bielle inférieure (6) est réalisée en forme de fourche au niveau de l'extrémité tournée vers la portion de bielle supérieure (3) sur une longueur partielle et **en ce que** le palier commun (5) pour la portion de bielle supérieure et inférieure (3, 6) et le point d'articulation (9) rapproché de l'axe du cylindre (19) pour le levier pivotant (8) sont disposés dans l'espace intermédiaire de l'extrémité en formé de fourche de la portion de bielle inférieure (6).
